# EUROPÄISCHE PATENTANMELDUNG

(11) **EP 1 378 706 A1**
(43) Veröffentlichungstag der Anmeldung: **07.01.2004**
(21) Anmeldenummer: 02014535.5
(22) Anmeldetag: 01.07.2002
(51) Int. Cl.: F16L 59/18, F01D 25/24

(54) **Flanschverbindung sowie Verfahren zum Montieren einer solchen Flanschverbindung**

(71) Anmelder: ALSTOM (Switzerland) Ltd, 5401 Baden (CH)
(72) Erfinder: Reigl, Martin, 5417 Untersiggenthal (CH); Meier, Jürg, Dr., 5235 Rüfenach (CH)

(57) **Zusammenfassung**

Eine Flanschverbindung (40) zwischen zwei Teilen (1, 3) umfasst eine obere Flanschhälfte (2) und eine untere Flanschhälfte (4), welche einen mit einem heissen Medium, insbesondere Heissgas oder Heissdampf, beaufschlagten Innenraum umschliessen, und welche durch Flanschschrauben (6) miteinander verschraubt sind, die sich jeweils mit einem Schraubenschaft (27) durch eine Flanschbohrung (19) in den Flanschhälften (2, 4) hindurch erstrecken, wobei der Schraubenschaft (27) von der Flanschbohrungswand (20) in einem Abstand umgeben ist.

Bei einer solchen Flanschverbindung wird auf einfache Weise ein effektiver Wärmeschutz der Flanschschrauben (6) dadurch erreicht, dass in dem Raum zwischen dem Schraubenschaft (27) und der Flanschbohrungswand (20) Wärmeschutzmittel (8) angeordnet sind, welche den Wärmefluss zwischen der Flanschbohrungswand (20) und dem Schraubenschaft (27) verringern.

## Beschreibung

### TECHNISCHES GEBIET

Die vorliegende Erfindung bezieht sich auf das Gebiet der Wärmekraftmaschinen. Sie betrifft eine Flanschverbindung gemäss dem Oberbegriff des Anspruchs 1 sowie ein Verfahren zum Montieren einer solchen Flanschverbindung.

### STAND DER TECHNIK

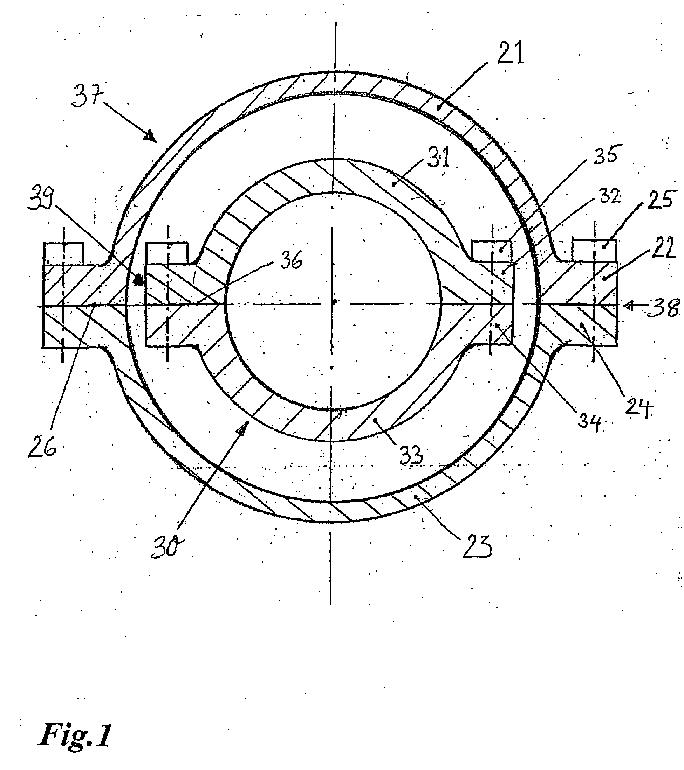

Dampf- und Gasturbinen besitzen unter Innendruck stehende Gehäuse. Oft haben sie Innen- und Außengehäuse, die je über einen Flansch verschraubt sind, wie dies auf vereinfachte Weise beispielhaft in Fig. 1 dargestellt ist. Fig. 1 zeigt ein Aussengehäuse 37, in welchem ein Innengehäuse 30 untergebracht ist. Mit 21 ist das Gehäuseoberteil des Außengehäuses 37, mit 23 das Gehäuseunterteil des Außengehäuses 37, mit 31 das Gehäuseoberteil des Innengehäuses 30, mit 33 das Gehäuseunterteil des Innengehäuses 30 bezeichnet. Aussen- und Innengehäuse 37 bzw. 30 weisen an den Verbindungsstellen zwischen Gehäuseoberteil und Gehäuseunterteil jeweils einen Flansch 38 bzw. 39 auf. Der Flansch 38 des Außengehäuses 37 besteht aus einer oberen Flanschhälfte 22, die Teil des Gehäuseoberteils 21 des Außengehäuses 37 ist, und einer unteren Flanschhälfte 24, die Teil des Gehäuseunterteils 23 des Außengehäuses 37 ist. Entsprechend besteht der Flansch 39 des Innengehäuses 30 aus einer oberen Flanschhälfte 32, die Teil des Gehäuseoberteils 31 des Innengehäuses 30 ist, und einer unteren Flanschhälfte 34, die Teil des Gehäuseunterteils 33 des Innengehäuses 30 ist. Die Flanschhälften werden durch Verschraubungen 25, 35 mit Muttern und Schrauben so fest aufeinandergepresst, dass durch die Teilflächen bzw. Teilfugen 26, 36 kein Dampf bzw. kein Gas nach außen gelangen kann.

Verschraubungen von Turbinenflanschen haben die Aufgabe, die beiden Flanschhälften mit einer Schraubenkraft derart zusammenzudrücken, dass aus dem unter Druck stehendem Gehäuse kein Dampf oder Gas entweichen kann. Bei hohen Temperaturen relaxieren die Schrauben, d.h. die Schraubenkraft wird mit der Zeit kleiner. Ist die Temperatur zu groß, dann relaxieren die Schrauben zu schnell, so dass sie das Gehäuse nicht mehr bis zum nächsten Revisionstermin dichthalten können.

Aus der Druckschrift US-B1-6,273,675 ist es bekannt, den Flansch vom Dampfturbinenaußengehäuse zu kühlen, indem Rohre am Außenrand des Flansches, aber noch innerhalb der Isolierung, angebracht werden, und durch die Rohre mittels freier Konvektion Wärme an die Umgebungsluft abgegeben wird. In der Druckschrift (Fig. 5) wird auch auf ein bekanntes Kühlverfahren von Außengehäusen hingewiesen, bei dem der Flansch durchbohrt wird und dadurch Luft durch freie Konvektion den Flansch kühlt.

Nachteilig bei diesen bekannten Vorrichtungen ist es, dass durch die Kühlung des Flansches ein enormer Wärmeverlust entsteht, wenn die Schrauben überhaupt in nennenswertem Maße eine Kühlwirkung erfahren sollen. Denn der Flansch wird im allgemeinen an der Gehäuseinnenwand durch das vorbeiströmende Fluid oder auf andere Weise stark erwärmt, wodurch eine grosse Temperaturdifferenz zwischen der erwärmten Flanschinnenseite und den Flanschkühlkanälen entsteht und ein großer Wärmestrom die Folge ist. Außerdem sind diese Vorrichtungen bei Dampfturbinen nur für Außengehäuse anwendbar, da die Innengehäuse von Dampf umströmt sind und Luft dort für die konvektive Kühlung nicht zur Verfügung steht.

Weiterhin ist es aus der Turbinentechnik bekannt, Schaufeln von Gasturbinen mit Wärmedämmschichten zu beschichten, um den Wärmefluss aus dem vorbeiströmenden Gas in die Schaufeln zu verkleinern und so die Temperatur der Schaufeln zu reduzieren.

Bekannt sind weiterhin Schutzbleche gegen Wärmestrahlung bei Dampfturbinen, die zwischen Innengehäuse und Außengehäuse angebracht sind und die den Wärmestrom vom heißen Innengehäuse in das kältere Außengehäuse oder in den zwischen Innen- und Aussengehäuse strömenden Dampf vermindern.

Das Problem der Standfestigkeit von Flanschverschraubungen von wärmebeaufschlagten Flanschverbindungen ist davon nicht berührt.

### DARSTELLUNG DER ERFINDUNG

Es ist Aufgabe der vorliegenden Erfindung, eine Flanschverbindung zu schaffen, bei welcher die Einsatzgrenzen der Flanschschrauben zu höheren Gehäusetemperaturen verschoben sind, sowie Verfahren zur Montage solcher Flanschverbindungen anzugeben.

Die Aufgabe wird durch die Gesamtheit der Merkmale der Ansprüche 1, 19 und 20 gelöst. Der Kern der Erfindung besteht darin, bei den Flanschschrauben zwischen dem Schraubenschaft (27) und der Flanschbohrungswand (20) Wärmeschutzmittel vorzusehen, durch welche der Wärmefluss vom Gehäuse in die Schraube vermindert wird. Hierdurch kann unter Beibehaltung der Flanschschrauben die Flanschverbindung mit höheren Innentemperaturen beaufschlagt werden, was insbesondere bei den zukünftigen Dampfturbinen mit immer höheren Dampftemperaturen und -drücken von Bedeutung ist.

Bevorzugt umgeben die Wärmeschutzmittel den Schraubenschaft über die gesamte Länge oder zumindest auf einem überwiegenden Teil der Länge. Hierdurch kann der Wärmefluss maximal verringert werden.

Besonders einfach werden dabei Herstellung und Montage der Wärmeschutzmittel, wenn diese im festen Zustand vorliegen. Das heisst sie bestehen aus einem soliden Material im Gegensatz zu aus einem flüssigen oder gasförmigen Kühlmedium.

Eine erste bevorzugte Ausgestaltung der Erfindung zeichnet sich dadurch aus, dass die Wärmeschutzmittel wenigstens eine sich parallel zur Flanschbohrung erstreckende Wärmedämmschicht umfassen, welche auf eine Oberfläche im Raum zwischen Schraubenschaft und Flanschbohrungswand aufgebracht ist. Diese Ausgestaltung hat den Vorteil, dass die Schicht ohne zusätzliche Teile auf bereits vorhandene Oberflächen in der Flanschverbindung aufgetragen werden kann. Insbesondere kann die Wärmedämmschicht auf die Flanschbohrungswand und/oder die Oberfläche des Schraubenschaftes aufgebracht sein.

Es ist aber auch denkbar, dass die Wärmedämmschicht auf einen zwischen Schraubenschaft und Flanschbohrungswand angeordneten, vorzugsweise hohlzylindrischen, Träger ein- oder beidseitig aufgebracht ist, wobei der Wärmefluss noch weiter verringert werden kann, wenn der Träger selbst ein Wärmeschutzblech ist.

Gemäss einer zweiten bevorzugten Ausgestaltung der Erfindung umfassen die Wärmeschutzmittel wenigstens ein Wärmeschutzblech. Insbesondere ist das wenigstens eine Wärmeschutzblech als Hohlzylinder ausgebildet, welcher den Raum zwischen dem Schraubenschaft und der Flanschbohrungswand in mehrere Zwischenräume unterteilt.

Grundsätzlich kann der Hohlzylinder des Wärmeschutzbleches geschlossen sein. Für die Montage auf Flanschschrauben, welche einen im Durchmesser verringerten Schraubenschaft aufweisen, ist es jedoch von Vorteil, wenn das wenigstens eine Wärmeschutzblech in Längsrichtung geschlitzt ist. Das geschlitzte Wärmeschutzblech kann dabei entlang der Längsrichtung entweder offen bleiben, oder es können (nach der Montage) die beiden Kanten des Schlitzes miteinander, vorzugsweise durch Punktschweissungen, fest verbunden sind.

Die Wärmeschutzwirkung wird weiter verbessert, wenn das wenigstens eine Wärmeschutzblech ein- oder beidseitig mit einer Wärmedämmschicht versehen ist.

Die Schutzwirkung des Wärmeschutzbleches ist besonders gut, wenn die von ihm eingeteilten Zwischenräume ausreichend breit sind. Um dies sicherzustellen, ist es besonders vorteilhaft, wenn das wenigstens eine Wärmeschutzblech Abstandhalter aufweist, mittels derer der Abstand des Wärmeschutzbleches zum Schraubenschaft und/oder zur Flanschbohrungswand festgelegt ist.

Besonders einfach lassen sich Abstandhalter dadurch erzeugen, dass die Abstandhalter mit dem Wärmeschutzblech einstückig ausgebildet und aus dem Wärmeschutzblech durch einen Stanz/Biegevorgang herausgeformt sind.

Anstelle eines Hohlzylinders kann das wenigstens eine Wärmeschutzblech aber auch spiralförmig gewickelt sein, wobei zwischen den Wicklungen ein vorgegebener Abstand eingehalten wird. Hierdurch ergibt sich auf einfache Weise die Wirkung mehrerer ineinandersteckender zylindrischer Wärmeschutzbleche. Zugleich kann das spiralige Wärmeschutzblech mit dünner Wandstärke versehen sein, sodass es zur Montage besonders leicht elastisch verformt werden kann

Bei einem solchen Wärmeschutzblech kann die Abstandhaltung auf einfachste Art dadurch erreicht werden, dass die Endkanten des Wärmeschutzbleches abgewinkelt sind, derart, dass sie als Abstandhalter zum Schraubenschaft und zur Flanschbohrungswand wirken.

Weiterhin ist es von Vorteil, dass, wenn die Flanschschrauben auf einer oder beiden Seiten der Flanschverbindung mit Dehnhülsen versehen sind, sich die Wärmeschutzmittel in den Bereich der Dehnhülsen hinein erstrecken.

In einer weiteren Ausführungsform bestehen die Wärmeschutzmittel aus einem faserhaltigen Material wie einer Wärmeschutzschnur, Wärmeschutzmatte, Wärmeschutzwolle oder aufspritzbarer Wärmeschutzmasse, das um die Flanschschraube angebracht wird. Mögliche Materialien sind hier Asbestschnur, Mineralfaserdämmstoffe, Glas- oder Schlackenwolle bzw. ein aufspritzbares Mineralfasergemisch. Wärmeschutzschnur und -matten lassen sich um die Flanschschraube wickeln, die Wärmeschutzwolle lässt sich zwischen Flanschbohrungswand und Schraubenschaft stopfen; die Wärmeschutzmasse lässt sich in flüssigem Zustand auf die Flanschschraube aufspritzen, wobei sie sich danach verfestigt.

Weitere Ausführungsformen ergeben sich aus den abhängigen Ansprüchen.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: in einer vereinfachten Schnittdarstellung die Gehäuseanordnung einer Gas- oder Dampfturbine mit einem jeweils eine Flanschverbindung enthaltenden Aussen- und Innengehäuse, bei denen die Erfindung vorteilhaft einsetzbar ist;
- Fig. 2: in einem Längsschnitt den Ausschnitt aus einer Flanschverbindung mit durchgehender Flanschschraube und einem zylindrischen Wärmeschutzblech gemäss einem ersten bevorzugten Ausführungsbeispiel der Erfindung;
- Fig. 3: in einer zu Fig. 2 vergleichbaren Darstellung eine Flanschverbindung mit Sacklochgewinde in der einen Flanschhälfte und einem zylindrischen Wärmeschutzblech gemäss einem zweiten Ausführungsbeispiel der Erfindung;
- Fig. 4: in einer zu Fig. 2 vergleichbaren Darstellung eine Flanschverbindung mit Dehnhülsen auf beiden Seiten der Flanschverbindung und einem zylindrischen Wärmeschutzblech gemäss einem dritten Ausführungsbeispiel der Erfindung;
- Fig. 5: einen Querschnitt durch die Flanschverbindung mit zylindrischem Wärmeschutzblech gemäss Fig. 2 bis 4;
- Fig. 6: in einer zu Fig. 2 vergleichbaren Darstellung eine Flanschverbindung mit zwei koaxialen zylindrischen Wärmeschutzblechen gemäss einem vierten Ausführungsbeispiel der Erfindung;
- Fig. 7: in einer perspektivischen Darstellung ein einzelnes zylindrisches Wärmeschutzblech mit einem Schlitz zur Erleichterung der Montage;
- Fig. 8: den Schnitt durch das Wärmeschutzblech aus Fig. 7 vor der Montage oder auch nach der Montage falls keine Punktschweissung angebracht worden ist;
- Fig. 9: den Schnitt durch das Wärmeschutzblech aus Fig. 7 nach der Montage, wobei die Kanten des Schlitzes durch eine Punktschweissung miteinander verbunden sind;
- Fig. 10: in einer zu Fig. 7 vergleichbaren Darstellung ein geschlitztes, zylindrisches Wärmeschutzblech mit durch einen Stanz/Biegevorgang ausgebildeten integrierten Abstandhaltern;
- Fig. 11: die Abstandhalter aus Fig. 10 in einer vergrösserten Detaildarstellung im Längsschnitt (linke Bildhälfte) und in der Draufsicht (rechte Bildhälfte);
- Fig. 12: in einer zu Fig. 2 vergleichbaren Darstellung eine Flanschverbindung mit einem zylindrischen Wärmeschutzblech mit beidseitiger zusätzlicher Wärmedämmschicht gemäss einem fünften Ausführungsbeispiel der Erfindung;
- Fig. 13: in einer zu Fig. 2 vergleichbaren Darstellung eine Flanschverbindung mit Wärmedämmschichten auf dem Schraubenschaft, der Flanschbohrungswand und den Innenseiten der Dehnhülsen gemäss einem sechsten Ausführungsbeispiel der Erfindung;
- Fig. 14: den Querschnitt durch ein spiralig gewickeltes Wärmeschutzblech gemäss einem weiteren Ausführungsbeispiel der Erfindung;
- Fig. 15: den Querschnitt durch ein spiralig gewickeltes Wärmeschutzblech, dessen abgewinkelte Endkanten als Abstandhalter wirken; und
- Fig. 16: in einer Querschnittsdarstellung das in einer Flanschverbindung montierte Wärmeschutzblech aus Fig. 15, und
- Fig. 17: eine zu Fig.2 vergleichbare Darstellung der Flanschverbindung, bei der die Schraubenenden Kühlrippen aufweisen, und
- Fig. 18: eine Seiten- und Draufsicht eines Teils der Flanschschraube mit Kühlrippen, und
- Fig. 19: eine Seiten- und Draufsicht einer Mutter der Flanschverbindung mit Kühlrippen.

### WEGE ZUR AUSFÜHRUNG DER ERFINDUNG

Zweck der vorliegenden Erfindung ist das Herabsetzen der Schraubentemperatur, besonders bei durchgesteckten Flanschschrauben von Innengehäusen und Heißrohrflanschen bei Turbinen mit einigen 100 °C durch wenigstens ein Wärmeschutzblech und/oder wenigstens eine Wärmedämmschicht um den Schraubenschaft. Die Dicke des Wärmeschutzbleches ist beispielsweise 0,5 bis 1 mm (je nach Verzunderungsneigung mehr oder weniger). Im Gegensatz zu einem reinen Strahlenschutzblech ist hier neben der reduzierten Wärmestrahlung eine ebenso große Wirkung infolge reduzierter freier Konvektion vorhanden.

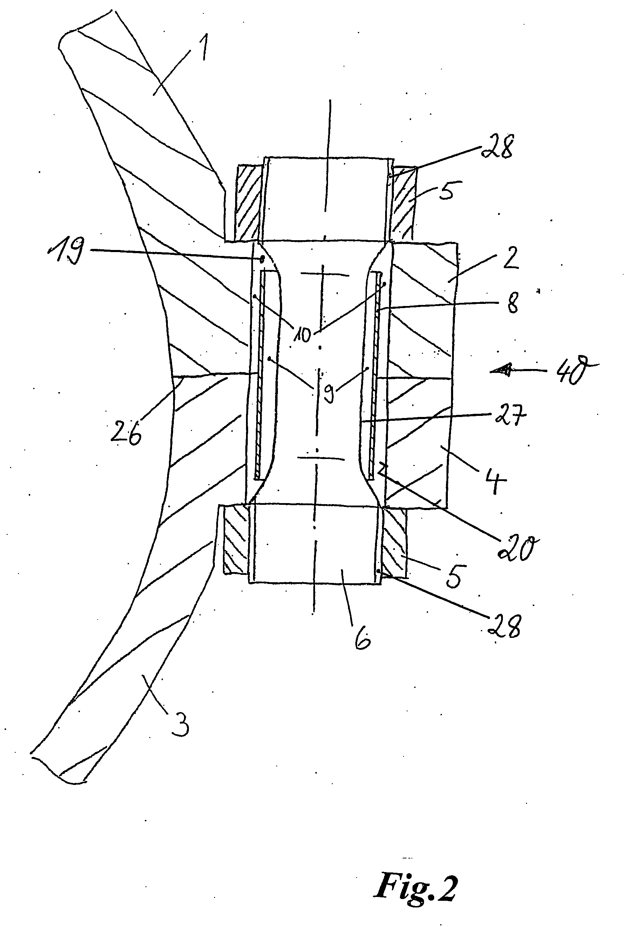

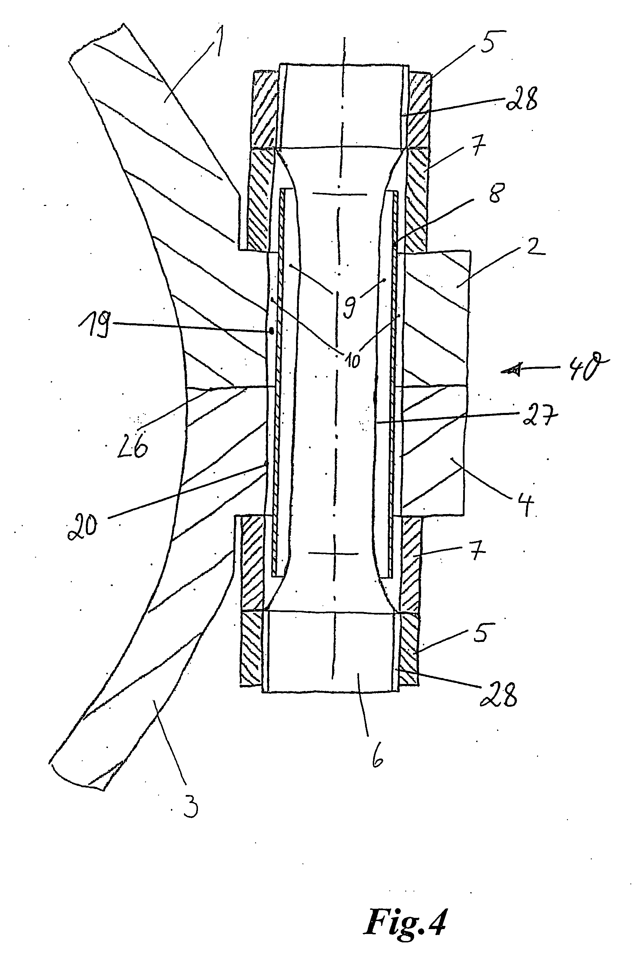

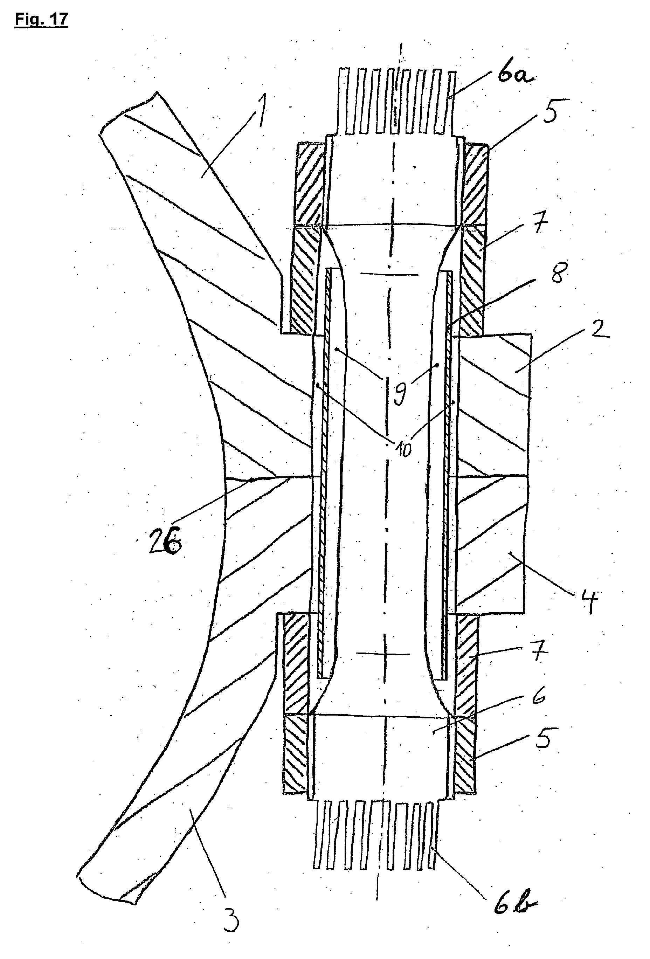

Überschlägige Berechnungen zu einem besonderen, nicht allgemein gültigen Beispiel zeigen, dass sich bei einem einzelnen Wärmeschutzblech der Wärmestrom durch Konvektion und Wärmestrahlung jeweils etwa halbiert. Bei Schraubenverbindungen, die im wesentlichen durch diesen Mechanismus erwärmt werden, also bei durchgesteckten Schrauben (Fig. 2), vor allem mit Dehnhülsen (Fig. 4), sinkt die Schrauben-Temperatur erheblich, insbesondere wenn die Schraubenflächen durch Kühlrippen (Fig. 17 bis 19) verstärkt gekühlt werden.

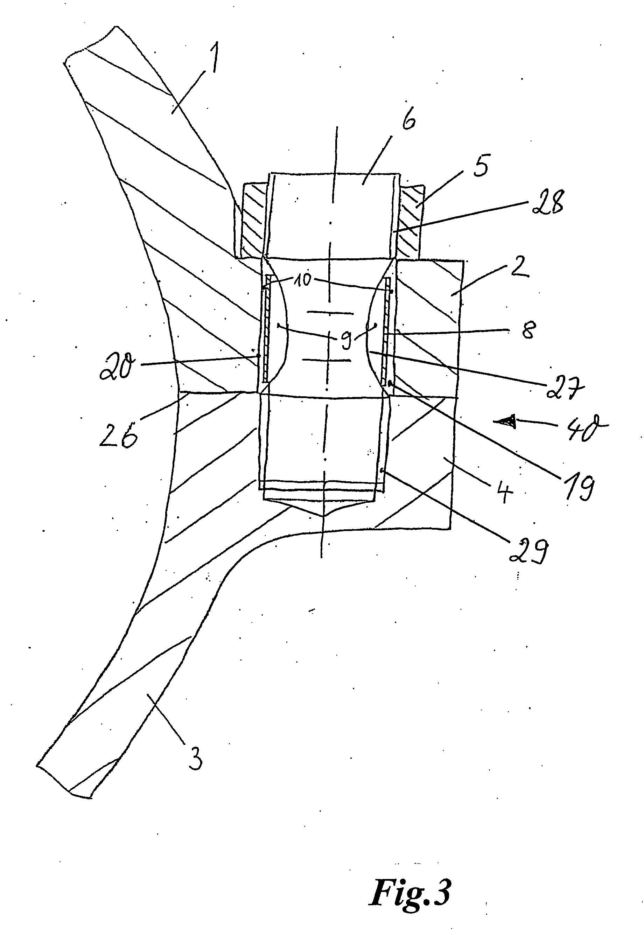

Bei Schraubenverbindungen mit Gewinde in der unteren Flanschhälfte (Fig. 3) ist die Wirkung geringer, da hier der größte Wärmestrom durch Wärmeleitung über das Gewinde erfolgt. Abschätzungen haben hier eine Reduzierung der Schraubentemperatur von etwa 5 bis 10 °C ergeben.

Ausgangspunkt ist eine Flanschverbindung mit einer Konfiguration, wie sie beispielhaft in Fig. 2 dargestellt ist. Die Flanschverbindung 40 verbindet in diesem Beispiel ein Gehäuseoberteil 1 mit einem Gehäuseunterteil 3. Am Gehäuseoberteil 1 ist eine obere Flanschhälfte 2 angeformt, am Gehäuseunterteil 3 eine untere Flanschhälfte 4. Beide Flanschhälften 2, 4 stossen an einer Teilfläche bzw. Teilfuge 26 zusammen. Die Flanschverbindung 40 weist Flanschbohrungen 19 auf, durch die jeweils eine Flanschschraube 6 mit Schraubengewinden 28 gesteckt ist, auf die von beiden Seiten des Flansches 2, 4 jeweils eine Schraubenmutter 5 aufgeschraubt ist. Die Flanschschraube 6 hat zwischen den Schraubengewinden 28 im Bereich des Flansches einen Schraubenschaft 27 mit verringertem Durchmesser, so dass in der Flanschbohrung 19 zwischen dem Schraubenschaft 27 und der Flanschbohrungswand 20 eine freier Raum bestehen bleibt.

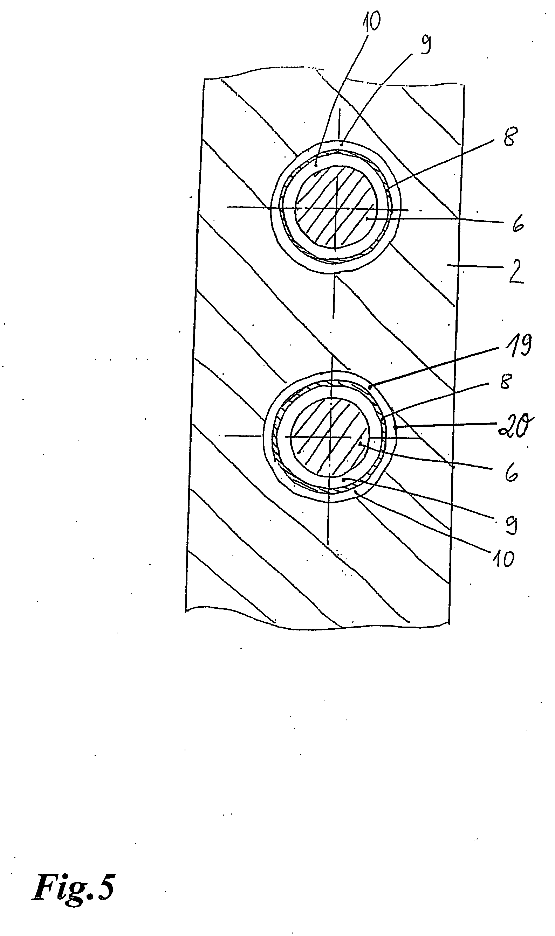

Die Erfindung besteht in der einen Variante gemäss Fig. 2 bis 12 im wesentlichen aus wenigstens einem dünnen Wärmeschutzblech 8, das zwischen Schraubenschaft 27 und Flanschbohrungswand 20 angebracht ist. Dieses kann bei verschiedenen Flanschverbindungen angewendet werden, siehe Fig. 2 bis Fig. 4. Durch das Wärmeschutzblech 8 wird der Raum zwischen Flanschbohrungswand 20 und Schraubenschaft 27 in zwei kleinere Zwischenräume 9 und 10 unterteilt (siehe auch Fig. 5; die Schraubenschäfte 27 der Flanschverbindung haben in dieser Ansicht eine Kreisform, die Wärmeschutzbleche 8 eine Ringform). Der senkrechte Abstand der begrenzenden Mantelflächen der Zwischenräume kann als Spaltbreite bezeichnet werden. Durch die Unterteilung des Raumes in zwei Zwischenräume 9, 10 wird der Wärmewiderstand zwischen Flanschbohrungswand 20 und Schraubenschaft 27 deutlich erhöht. Abgesehen vom Wärmefluss, der durch Wärmeleitung über das Schraubengewinde in die Schraube gelangt, kommt der Wärmefluss zwischen Flanschbohrungswand 20 und Schraubenschaft 27 durch Konvektion und Wärmestrahlung zustande.

Die Konvektion erfolgt durch das Fluid, das sich in diesem Zwischenraum befindet. Bei einer Dampfturbine ist dieses Fluid im Falle eines Außengehäuses im Allgemeinen Luft, in Falle eines Innengehäuses im Allgemeinen Dampf. Die Konvektion ist in starkem Maße von der Spaltbreite des Zwischenraums abhängig. Eine Unterteilung des Raumes durch das Wärmeschutzblech 8 in zwei kleinere Zwischenräume reduziert den konvektiven Wärmeübergang deshalb erheblich.

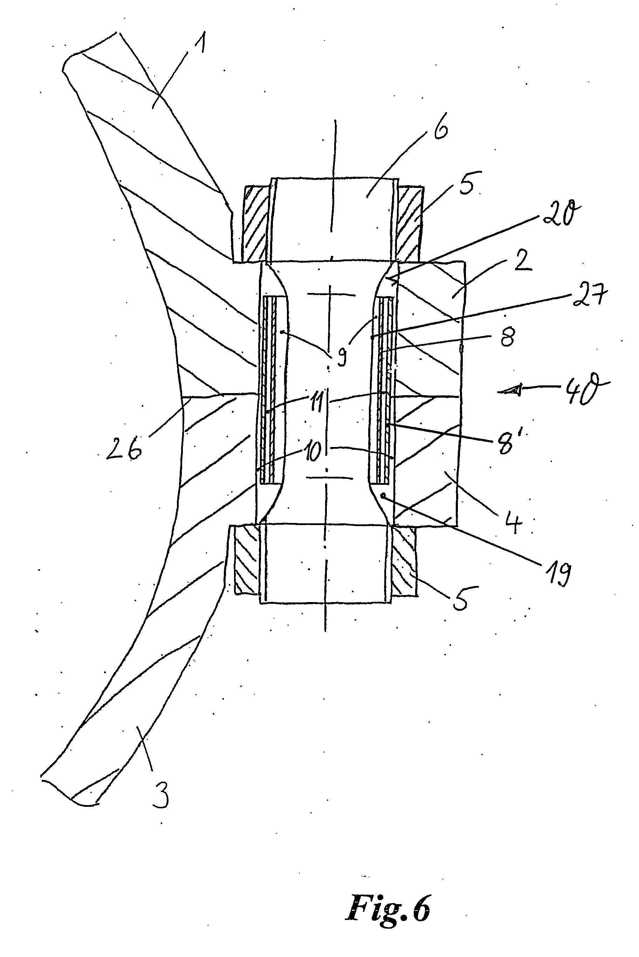

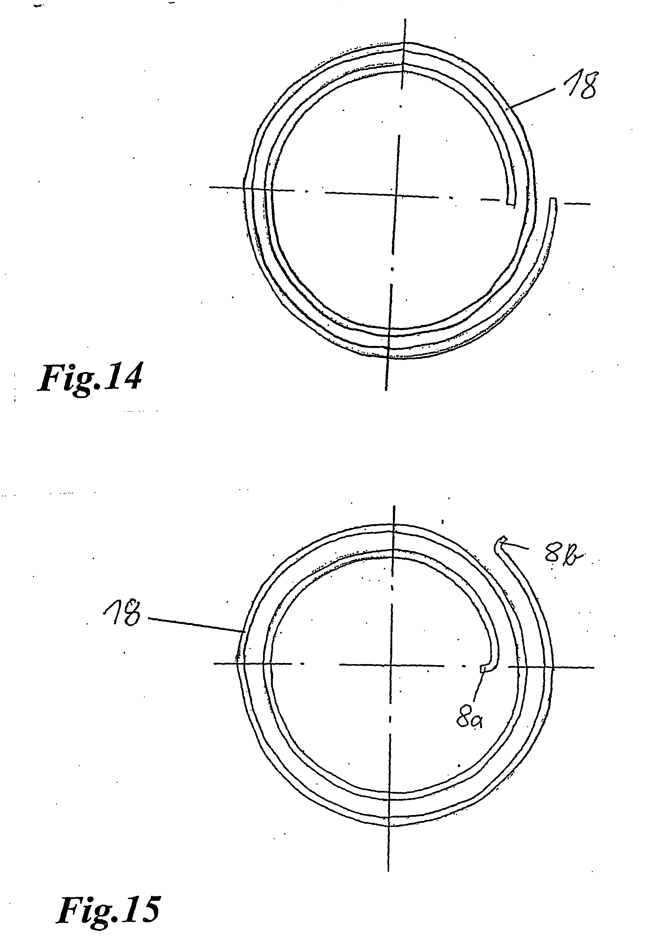

Die Größe des Wärmeflusses durch Wärmestrahlung hängt von der Temperatur der Flächen zu beiden Seiten des jeweiligen Zwischenraumes ab, kaum aber von der Spaltbreite des Zwischenraumes. Genauer gesprochen hängt sie nach dem Stefan-Boltzmannschen Strahlungsgesetz von der vierten Potenz der Temperatur ab. Deshalb wird der Wärmefluss, der durch Wärmestrahlung übertragen wird, bei zukünftigen Dampfturbinen, die mit immer noch höheren Gehäusetemperaturen betrieben werden, von größerer Bedeutung sein. Es ist in anderen Anwendungen bekannt, dass Strahlenschutzschirme den Wärmefluss erheblich reduzieren. Bei gleichen Oberflächeneigenschaften der Flächen auf beiden Seiten des Zwischenraumes und des Strahlenschutzschirmes reduziert ein Strahlenschutzschirm, dessen Funktion das erfindungsgemäße Wärmeschutzblech 8 ebenfalls übernimmt, im Zwischenraum den Wärmefluss infolge Wärmestrahlung etwa um die Hälfte (siehe dazu: Gröber; Erk; Grigull: Die Grundgesetze der Wärmeübertragung. 3. Auflage. Springer-Verlag Berlin 1955, Seite 390 bis 392). Der Wärmefluss wird weiter reduziert, wenn anstelle eines Wärmeschutzbleches 8 gemäss Fig. 6 mehrere Wärmeschutzbleche 8, 8' in koaxialer Anordnung verwendet werden, wodurch sich die Anzahl der Zwischenräume 9, 10, 11 erhöht. Das gilt auch für den Wärmefluss infolge Konvektion. Anstelle mehrerer Wärmeschutzbleche 8, 8' kann auch gemäss Fig. 14 bis 16 ein mehrfach gewickeltes, spiraliges Wärmeschutzblech 18 verwendet werden.

Das Wärmeschutzblech 8 ist anwendbar sowohl bei durchgesteckten Flanschschrauben 6 (siehe Fig. 2), als auch bei Flanschschrauben 6 mit Sacklochgewinde 29 (siehe Fig. 3), wobei das Wärmeschutzblech 8 bei durchgesteckten Flanschschrauben 6 wegen der geringeren Kontaktfläche mit dem Flansch 2, 4 zu kälteren Flanschschrauben führt als bei einer Flanschverbindung mit Sacklochgewinde 29. Wird die Schraubenverbindung gemäss Fig. 4 mit einer Dehnhülse 7 an jedem Schraubenende versehen, ist der Wärmefluss aus dem Gehäuse 1, 3 in die Flanschschraube 6 durch Wärmeleitung aufgrund des größeren Wärmewiderstandes noch geringer, wodurch die Temperatur des Schraubenschaftes 27 noch niedriger wird und die erfindungsgemäße Vorrichtung noch wirksamer wird. Die Dehnhülsen 7 in Fig. 4 stellen nämlich einen zusätzlichen Wärmewiderstand beim Wärmestrom durch Wärmeleitung in die Flanschschraube 6 dar. Hier ist der Anteil des Wärmestroms, der durch Konvektion und Strahlung von der Flanschbohrung 19 auf den Schraubenschaft 27 übertragen wird, besonders hoch. Das Wärmeschutzblech 8 ist hier deshalb besonders wirksam.

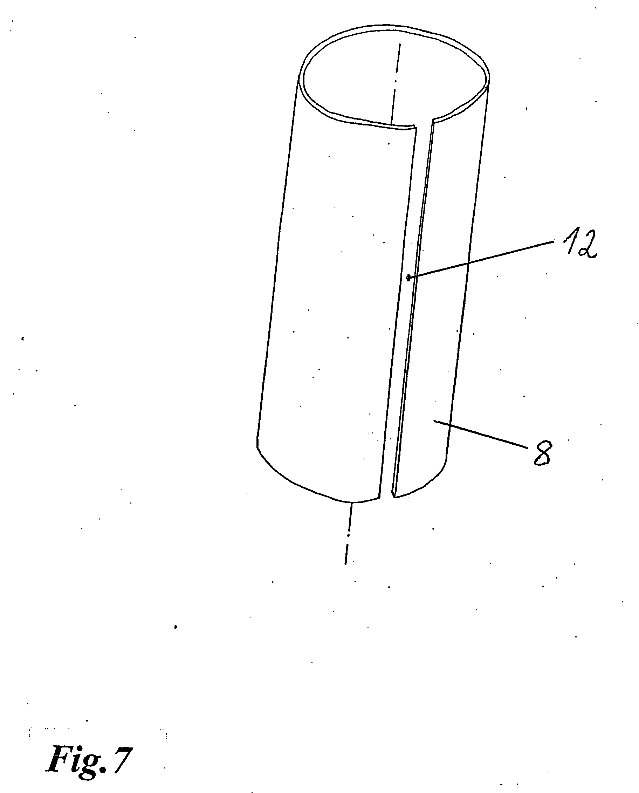

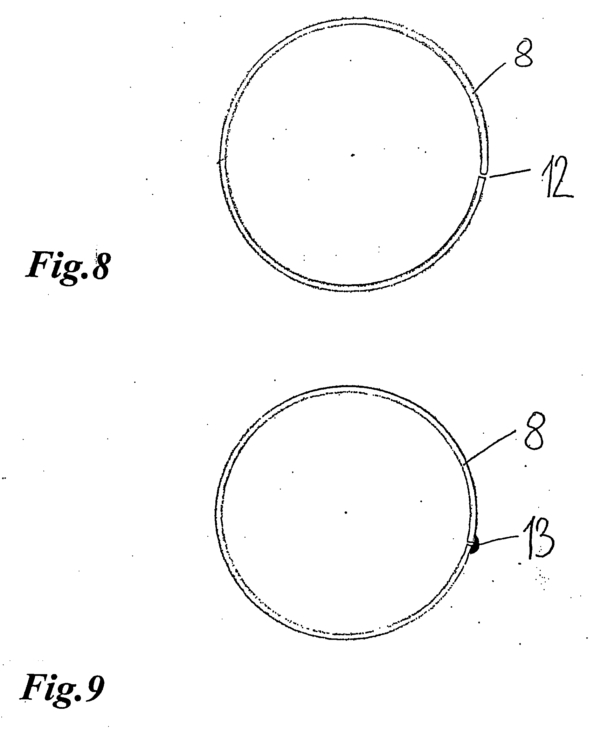

Bei Dehnschrauben, wie sie zum Beispiel häufig bei Flanschverbindungen im Turbinenbau verwendet werden, ist der Schaftdurchmesser des Schraubenschaftes 27 üblicherweise kleiner als der Gewindenenndurchmesser der Schraubengewinde 28. Zudem ist die Spaltbreite des Raumes zwischen Schraubenschaft 27 und Flanschbohrungswand 20 nicht sehr groß. Ein über das Schraubengewinde 28 geschobenes Wärmeschutzblech in Rohrform würde aufgrund des großen Schraubennenndurchmessers diesen Raum häufig in zwei Zwischenräume 9, 10 mit sehr unterschiedlichen Spaltbreiten unterteilen. Die Spaltbreite des äußeren Zwischenraumes 10 wäre im Allgemeinen sehr klein, die Spaltbreite des inneren Zwischenraumes 9 wäre im Vergleich dazu sehr groß. Im Allgemeinen wünscht man aber eine einigermaßen gleichmäßige Verteilung der Spaltbreiten, um die Wärmeschutzwirkung zu erhöhen. Deshalb ist es sinnvoll, das zylindrische bzw. rohrförmige Wärmeschutzblech 8 gemäss Fig. 7 bis 10 geschlitzt herzustellen. Dadurch kann es mit kleinerem Durchmesser versehen werden, da es durch Aufbiegen während der Montage über das dickere Schraubengewinde 28 der Flanschschraube 6 geschoben werden kann. Nach erfolgter Montage kann der Schlitz 12 des Wärmeschutzbleches 8 zum Beispiel durch Punktschweißungen 13 (Fig. 9) überbrückt werden, was dem Wärmeschutzblech 8 größere Steifigkeit verleiht.

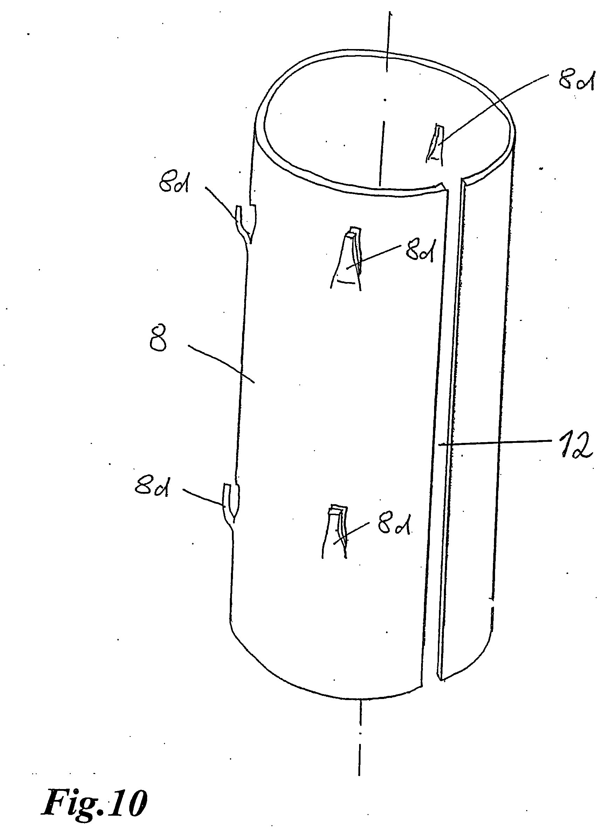

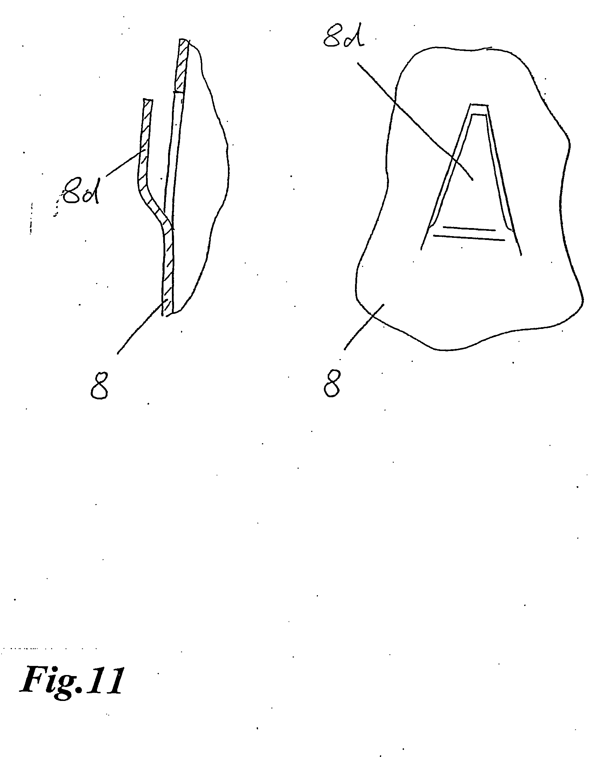

Um die Spaltbreiten der Zwischenräume 9, 10 nach Vorgabe einzustellen, ist es weiter sinnvoll, Abstandhalter zu verwenden. Diese können zum Beispiel am Wärmeschutzblech 8 durch Schweißen angebracht werden. Eine andere, bevorzugte Möglichkeit ist das Herausschneiden und Herausbiegen von Blechteilen aus dem Wärmeschutzblech 8 nach Fig. 10 und Fig. 11 mittels eines Stanz/Biegevorgangs. Diese herausgebogenen Blechteile übernehmen die Funktion von Abstandhaltern 8d. Sie können nach innen oder nach außen gebogen werden, um den Abstand nach innen oder nach außen einzustellen.

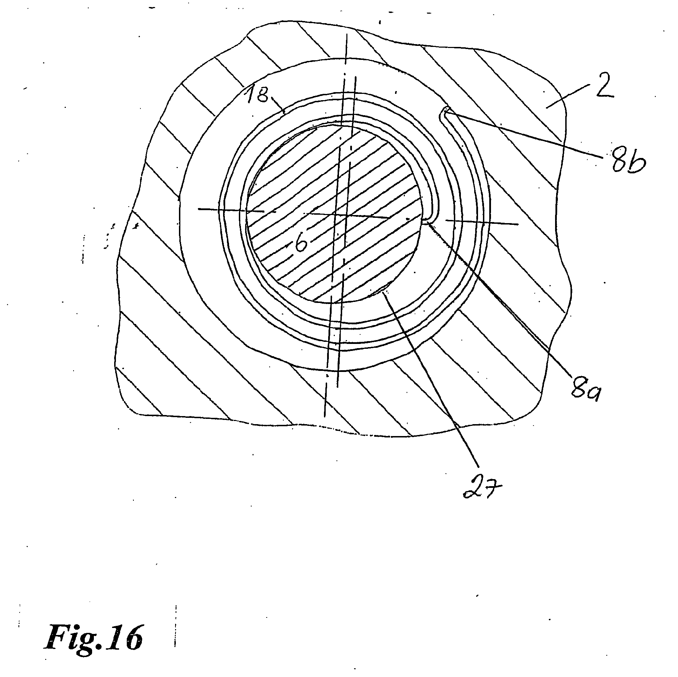

Eine weitere Möglichkeit, die Spaltweite einzustellen, ist es, die Endkanten des Wärmeschutzbleches umzubiegen und diese umgebogenen (abgewinkelten) Endkanten 8a,b als Abstandhalter zu verwenden. Diese umgebogenen Endkanten 8a,b können zum Beispiel an geschlitzten Wärmeschutzblechen in Rohrform oder an gewickelten Wärmeschutzblechen 18 gemäss Fig. 15 und Fig. 16 angebracht werden. Durch die Federwirkung des Wärmeschutzbleches pressen sich die umgebogenen Endkanten 8a,b an den Schraubenschaft 27 und die Flanschbohrungswand 20, wodurch ein Kraftschluss entsteht. Fig. 16 zeigt einen Einbauzustand des gewickelten und abgewinkelten Wärmeschutzbleches 18 von Fig. 15. Aufgrund der Positionierung des Wärmeschutzbleches 18 mit den abgewinkelten Endkanten 8a,b ist die axiale Mittellinie des Wärmeschutzbleches 18 von der Symmetrieachse des Schraubenschaftes 27 etwas verschoben. Die Innenseite des Wärmeschutzbleches 18 gegenüber der inneren abgewinkelten Endkante 8a liegt teilweise am Schraubenschaft 27 an, wodurch zusätzlich ein unerwünschter Wärmefluss infolge Wärmeleitung zustande kommt. Aber diese Konstruktion erlaubt es auf einfache Weise, den Zwischenraum zwischen Schraubenschaft 27 und Flanschbohrungswand 20 mehrfach zu unterteilen, was den Wärmewiderstand zwischen Flanschbohrungswand 20 und Schraubenschaft 27 im Allgemeinen erhöht.

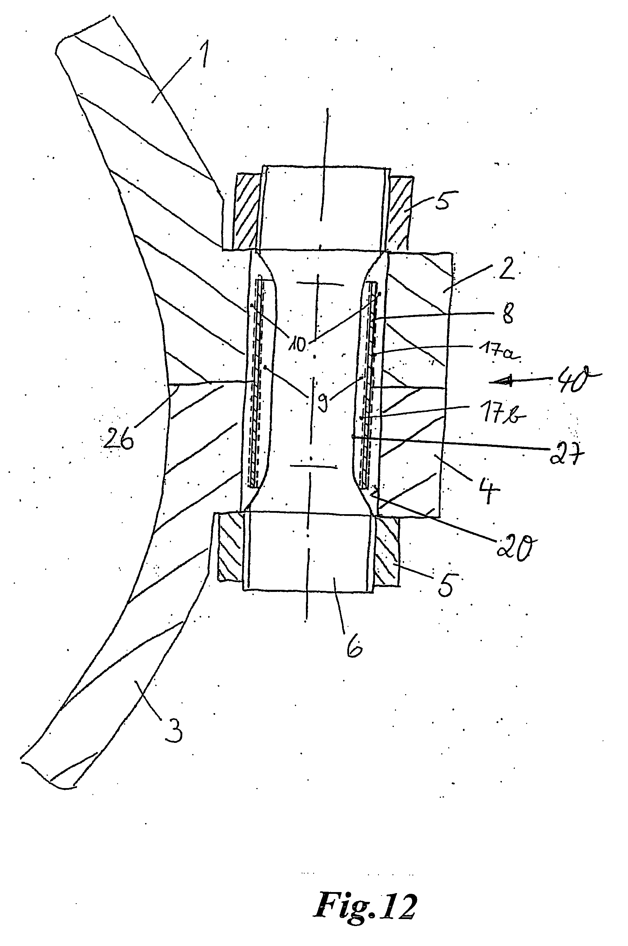

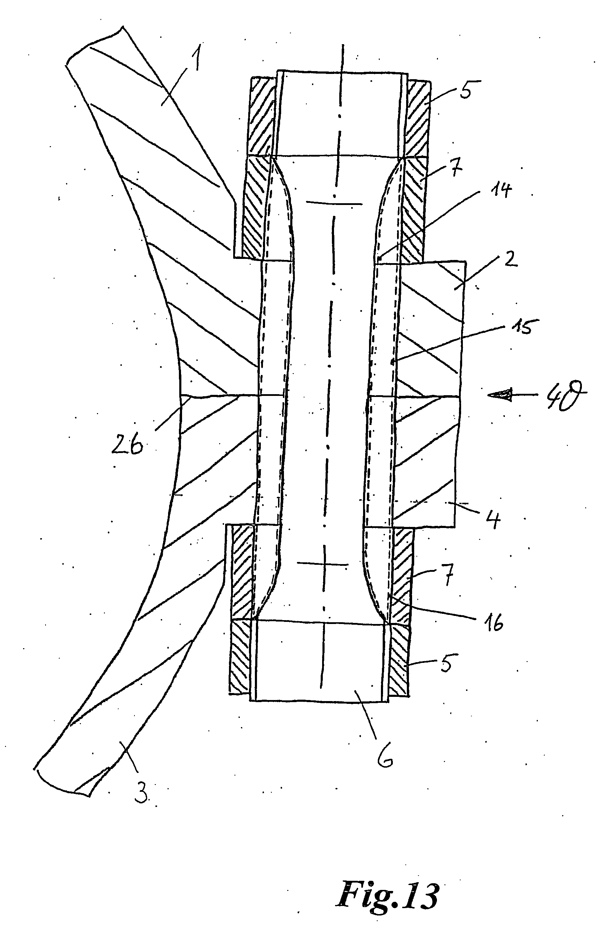

Um die Wärmeschutzwirkung zu erhöhen, können die Wärmeschutzbleche 8 gemäss Fig. 12 ein- oder beidseitig mit einer Wärmedämmschicht 17a,b beschichtet werden. Auch der Schraubenschaft 27, die Innenseite oder ein Teil der Innenseite der Dehnhülsen 7 und die Flanschbohrungswand 20 können (mit oder ohne Wärmeschutzblech 8) jeweils gemäss Fig. 13 mit einer Wärmedämmschicht 14, 15, 16 beschichtet werden, um die Wärmeschutzwirkung zu erhöhen.

Ein weiterer Vorteil der beschriebenen Wärmeschutzbleche ist ihre einfache Herstellbarkeit. So können beispielsweise die mehrfach gewickelten Wärmeschutzbleche 18 nach Fig. 14 oder die geschlitzten Wärmeschutzbleche 8 nach Fig. 7 in nahezu beliebigen, auch variablen Krümmungsdurchmessern sehr wirtschaftlich durch Drei-Walzen-Biegen oder durch Endgesteuertes Biegen hergestellt werden (siehe dazu die Druckschrift DE-A1-43 10 773). Auch lassen sich die herausgebogenen Abstandhalter 8d nach Fig. 10 im noch ebenen Zustand des Bleches durch einen stanzähnlichen Vorgang einfach erstellen, und anschließend kann das Blech durch Endgesteuertes Biegen, das eine Freibiegemethode darstellt, zu dem benötigten Krümmungsdurchmesser gebogen werden.

Die erläuterten erfindungsgemäßen Flanschverbindungen führen zu folgenden Vorteilen:
- Die Schraubentemperatur wird niedriger, ohne den Wärmeverlust aus dem Gehäuse durch Kühlung zu erhöhen, was beispielsweise im Turbinenbau von Bedeutung ist.
- Da die Schraubenfestigkeit und die Schraubenrestkraft mit zunehmender Temperatur abnehmen, werden die Schraubenfestigkeit und die Schraubenrestkraft höher.

Dieser Gewinn an Schraubenkraft kann vorteilhaft wie folgt genutzt werden:
- Die Einsatzgrenze der Schrauben wird in Richtung höherer Temperaturen und höherer Drücke verschoben.
- Es gibt eine Kostenersparnis, da kleinere Schrauben und kleinere Flansche verwendet werden können. Im Falle von Innengehäuseflanschschrauben kann aufgrund der kleineren Flansche das Außengehäuse kleiner gebaut werden, was eine weitere Kostenersparnis bringt. Im Falle von zukünftigen Dampfturbinen, die bei sehr hohen Temperaturen betrieben werden sollen, ist die Materialersparnis aufgrund der sehr teuren Hochtemperaturmaterialien ein besonders wichtiger Kostenfaktor.
- Kostenersparnis, da billigeres Schraubenmaterial verwendet werden kann.
- Kostenersparnis, da Revisionsintervalle der Schrauben verlängert werden können.
- Auf mangelnder Schraubenrestspannung beruhende Undichtigkeit von Gehäuseflanschen kann unter Umständen nachträglich auf einfache Weise beseitigt werden.

Die erfindungsgemässe Flanschverbindung führt auch dazu, dass die Schraubenkraft nach instationären Betriebsvorgängen nicht so stark absinkt. Beispielsweise beim Anfahren erwärmt sich der Flansch mit der Zeit, die Erwärmung der Schraube erfolgt zeitverzögert, da die Wärme erst durch den Flansch fließen muss, bevor sie in die Schraube gelangt. Aufgrund der Wärmedehnung des Flansches nimmt die Schraubenkraft zuerst zu, während sie nach einiger Zeit, nachdem sich auch die Schraube erwärmt hat und sich deshalb ausdehnt, wieder absinkt. Bei Flanschverbindungen mit der erfindungsgemäßen Wärmeschutzvorrichtung ist dieser instationäre Abfall der Schraubenkraft kleiner, da sich die Schraube nicht so stark erwärmt und damit die Wärmedehnung der Schraube kleiner bleibt. Bei gleicher Schraubenkraft im stationären Betriebszustand brauchen also die Schrauben mit der erfindungsgemäßen Vorrichtung weniger vorgespannt zu werden. Die geringere Vorspannung im kalten Zustand hat aber den Vorteil, dass größere Temperaturtransienten zugelassen werden können, da aufgrund der geringeren Vorspannung die zusätzlichen Spannungen aufgrund der unterschiedlichen Wärmedehnung von Flansch und Schraube größer sein dürfen, bevor es zu einer Überbeanspruchung der Schraube kommt.

Die erfindungsgemäße Flanschverbindung kann beispielsweise im Dampfturbinenbau bei Außengehäusen, Schaufel- bzw. Leitradträgern und Dichtungsträgern verwendet werden. Am sinnvollsten ist ihr Einsatz aber bei Gehäusen und Rohrflanschen mit sehr heißem Medium, beispielsweise im Dampfturbinenbau bei Rohrflanschen von Heißdampfleitungen (Frischdampf- und HZÜ-Leitungen) und bei Innengehäusen.

Hinsichtlich der Kosten ist die effektivste und gleichzeitig einfachste Konstruktion das mehrfachgewickelte Wärmeschutzblech 18 nach Fig. 15, 16 mit den umgebogenen Endkanten 8a,b. Seine Herstellung und seine Materialkosten ist sehr billig und vernachlässigbar im Vergleich zu den Kosten einer Flanschschraube. Auch die Montagekosten eines Wärmeschutzbleches dieser Art sind gering. Im ersten Schritt wird das elastische Wärmeschutzblech 18 über das Gewinde auf den Schraubenschaft 27 gezogen. Durch die Federwirkung des Wärmeschutzbleches 18 ist der Kraftschluss mit der Flanschschraube 6 gegeben. Das Wärmeschutzblech 18 wird dann mit einem Faden zusammengebunden, so dass das Gehäuseoberteil über die Schrauben auf das Gehäuseunterteil gesetzt werden kann, ohne dass die Wärmeschutzbleche stören. Durch die hohen Temperaturen wird der Faden aufgelöst, die Wärmeschutzbleche spreizen sich aufgrund der Federwirkung auf und pressen sich an die Flanschbohrungswand.

Fig. 17 zeigt eine Flanschverbindung, bei der an den Schraubenenden Kühlrippen 6a, 6b angebracht sind. Das ausserhalb des Gehäuses 1, 2 befindliche kältere Fluid (Dampf bei Innengehäuseflansch, Luft bei Außengehäuseflansch) kühlt über die Kühlrippen verstärkt die Schraube, wodurch die Schraubentemperatur weiter erniedrigt wird. Auch an den Muttern können Kühlrippen angebracht werden (in Fig. 17 nicht dargestellt).

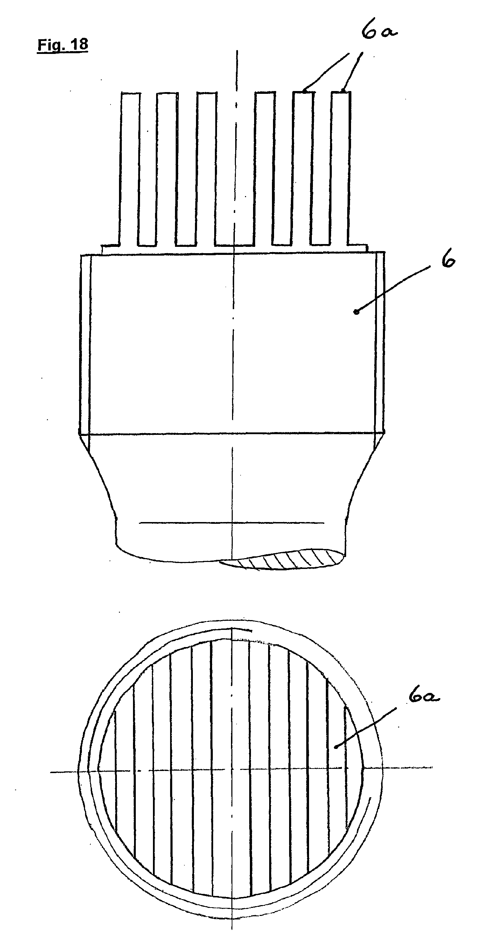

Fig. 18 zeigt in Seitenansicht und in Draufsicht einen Teil der Flanschschraube mit angebrachten Kühlrippen 6a. Die Kühlrippen sind hier beispielsweise durch Fräsen aus dem Schraubenrohmaterial hergestellt. Sie können aber auch als separates Teil hergestellt sein und auf das Schraubenende aufgeschraubt oder angeschweißt sein.

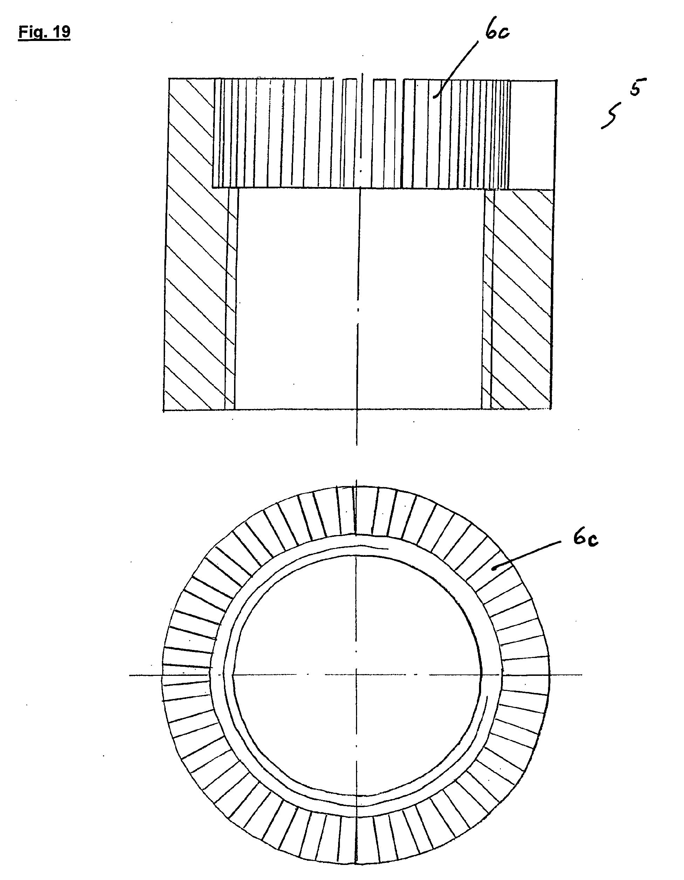

Fig. 19 zeigt in Seitenansicht und in Draufsicht ein Beispiel einer Mutter mit Kühlrippen. Auch hier können die Kühlrippen aus dem Rohmaterial der Mutter herausgeschnitten sein oder als getrenntes Teil hergestellt und dann durch Schweißen oder Schrauben an die Mutter angebracht sein.

### BEZUGSZEICHENLISTE

- 1: Gehäuseoberteil
- 2: obere Flanschhälfte
- 3: Gehäuseunterteil
- 4: untere Flanschhälfte
- 5: Schraubenmutter
- 6: Flanschschraube
- 6a,b,c: Kühlrippen
- 7: Dehnhülse
- 8,8': Wärmeschutzblech
- 8a,b: Endkante (abgewinkelt)
- 8d: Abstandhalter
- 9,10,11: Zwischenraum
- 12: Schlitz
- 13: Punktschweissung
- 14,15,16: Wärmedämmschicht
- 17a,b: Wärmedämmschicht
- 18: Wärmeschutzblech
- 19: Flanschbohrung
- 20: Flanschbohrungswand
- 21,31: Gehäuseoberteil
- 22,32: obere Flanschhälfte
- 23,33: Gehäuseunterteil
- 24,34: untere Flanschhälfte
- 25,35: Verschraubung
- 26,36: Teilfläche (Teilfuge)
- 27: Schraubenschaft
- 28: Schraubengewinde
- 29: Sacklochgewinde
- 30: Innengehäuse
- 37: Aussengehäuse
- 38,39,40: Flanschverbindung

## Patentansprüche

1. Flanschverbindung (38, 39, 40) zwischen zwei Teilen (1, 3; 21, 23; 31, 33) mit einer oberen Flanschhälfte (2, 22, 32) und einer unteren Flanschhälfte (4, 24, 34), welche einen mit einem heissen Medium, insbesondere Heissgas oder Heissdampf, beaufschlagten Innenraum umschliessen, und welche durch Flanschschrauben (6) miteinander verschraubt sind, die sich jeweils mit einem Schraubenschaft (27) durch eine Flanschbohrung (19) in den Flanschhälften (2, 22, 32; 4, 24, 34) hindurch erstrecken, wobei der Schraubenschaft (27) von der Flanschbohrungswand (20) in einem Abstand umgeben ist, **dadurch gekennzeichnet, dass** in dem Raum zwischen dem Schraubenschaft (27) und der Flanschbohrungswand (20) Wärmeschutzmittel (8, 8'; 14, 15, 16; 17a,b; 18) angeordnet sind, welche den Wärmefluss zwischen der Flanschbohrungswand (20) und dem Schraubenschaft (27) verringern.

2. Flanschverbindung nach Anspruch 1, **dadurch gekennzeichnet, dass** die Wärmeschutzmittel (8, 8'; 14, 15, 16; 17a,b; 18) den Schraubenschaft (27) über die gesamte Länge oder zumindest auf einem überwiegenden Teil der Länge umgeben.

3. Flanschverbindung nach Anspruch 2, **dadurch gekennzeichnet, dass** die Wärmeschutzmittel (8, 8'; 14, 15, 16; 17a,b; 18) im festen Zustand vorliegen.

4. Flanschverbindung nach Anspruch 3, **dadurch gekennzeichnet, dass** die Wärmeschutzmittel wenigstens eine sich parallel zur Flanschbohrung (19) erstreckende Wärmedämmschicht (14, 15, 16; 17a,b) umfassen, welche auf eine Oberfläche im Raum zwischen Schraubenschaft (27) und Flanschbohrungswand (20) aufgebracht ist.

5. Flanschverbindung nach Anspruch 4, **dadurch gekennzeichnet, dass** die Wärmedämmschicht (14, 15) auf die Flanschbohrungswand (20) und/oder die Oberfläche des Schraubenschaftes (27) aufgebracht ist.

6. Flanschverbindung nach Anspruch 4, **dadurch gekennzeichnet, dass** die Wärmedämmschicht (17a,b) auf einen zwischen Schraubenschaft (27) und Flanschbohrungswand (20) angeordneten, vorzugsweise hohlzylindrischen, Träger (8) ein- oder beidseitig aufgebracht ist.

7. Flanschverbindung nach Anspruch 6, **dadurch gekennzeichnet, dass** der Träger ein Wärmeschutzblech (8) ist.

8. Flanschverbindung nach Anspruch 3, **dadurch gekennzeichnet, dass** die Wärmeschutzmittel wenigstens ein Wärmeschutzblech (8, 8', 18) umfassen.

9. Flanschverbindung nach Anspruch 8, **dadurch gekennzeichnet, dass** das wenigstens eine Wärmeschutzblech (8, 8') als Hohlzylinder ausgebildet ist, welcher den Raum zwischen dem Schraubenschaft (27) und der Flanschbohrungswand (20) in mehrere Zwischenräume (9, 10, 11) unterteilt.

10. Flanschverbindung nach Anspruch 9, **dadurch gekennzeichnet, dass** das wenigstens eine Wärmeschutzblech (8, 8') in Längsrichtung geschlitzt ist, und dass das wenigstens eine Wärmeschutzblech (8.8') in Längsrichtung offen ist oder dass die beiden Kanten des Schlitzes (12) miteinander, vorzugsweise durch Punktschweissungen (13), fest verbunden sind.

11. Flanschverbindung nach Anspruch 8 oder 9, **dadurch gekennzeichnet, dass** das wenigstens eine Wärmeschutzblech (8, 8', 18) ein- oder beidseitig mit einer Wärmedämmschicht (17a,b) versehen ist.

12. Flanschverbindung nach einem der Ansprüche 8 bis 11, **dadurch gekennzeichnet, dass** das wenigstens eine Wärmeschutzblech (8, 8', 18) Abstandhalter (8a,b, 8d) aufweist, mittels derer der Abstand des Wärmeschutzbleches (8, 8', 18) zum Schraubenschaft (27) und/oder zur Flanschbohrungswand (20) festgelegt ist.

13. Flanschverbindung nach Anspruch 12, **dadurch gekennzeichnet, dass** die Abstandhalter (8d) mit dem Wärmeschutzblech (8, 8') einstückig ausgebildet und aus dem Wärmeschutzblech (8, 8') durch einen Stanz/Biegevorgang herausgeformt sind.

14. Flanschverbindung nach Anspruch 8, **dadurch gekennzeichnet, dass** das wenigstens eine Wärmeschutzblech (18) spiralförmig gewickelt ist, wobei zwischen den Wicklungen ein vorgegebener Abstand eingehalten wird.

15. Flanschverbindung nach Anspruch 14, **dadurch gekennzeichnet, dass** die Endkanten (8a,b) des Wärmeschutzbleches (18) abgewinkelt sind, derart, dass sie als Abstandhalter zum Schraubenschaft (27) und zur Flanschbohrungswand (20) wirken.

16. Flanschverbindung nach einem der Ansprüche 1 bis 15, **dadurch gekennzeichnet, dass** die Flanschschrauben (6) auf einer oder beiden Seiten der Flanschverbindung (38, 39, 40) mit Dehnhülsen (7) versehen sind, und dass sich die Wärmeschutzmittel (8, 8'; 14, 15, 16; 17a,b; 18) in den Bereich der Dehnhülsen (7) hinein erstrecken.

17. Flanschverbindung nach einem der Ansprüche 1 bis 16, **dadurch gekennzeichnet, dass** auf die Flanschschrauben (6) auf einer oder beiden Seiten der Flanschverbindung (38, 39, 40) Schraubenmuttern (5) aufgeschraubt sind, und dass an den Schraubenmuttern (5) und/oder an den aus den Schraubenmuttern (5) herausragenden Teilen der Flanschschrauben (6) Kühlmittel angeordnet sind.

18. Flanschverbindung nach Anspruch 17, **dadurch gekennzeichnet, dass** als Kühlmittel Kühlrippen vorgesehen sind.

19. Flanschverbindung nach Anspruch 3 **dadurch gekennzeichnet, dass** die Wärmeschutzmittel aus einem faserhaltigen Material wie einer Wärmeschutzschnur, Wärmeschutzmatte, Wärmeschutzwolle oder einer aufspritzbaren Wärmeschutzmasse bestehen.

20. Verfahren zum Montieren einer Flanschverbindung nach Anspruch 10, **dadurch gekennzeichnet, dass** in einem ersten Schritt das geschlitzte Wärmeschutzblech (8) im Durchmesser erweitert bzw. aufgebogen wird, dass in einem zweiten Schritt das aufgebogene Wärmeschutzblech (8) über die Flanschschraube (6) geschoben wird, dass in einem dritten Schritt das montierte Wärmeschutzblech (8) wieder zusammengebogen wird, und dass in einem vierten Schritt das Wärmeschutzblech (8) am Schlitz (12) fest verbunden wird.

21. Verfahren zum Montieren einer Flanschverbindung nach Anspruch 14, **dadurch gekennzeichnet, dass** in einem ersten Schritt das elastisch erweiterte Wärmeschutzblech (18) über die Flanschschraube (6) gezogen wird, und dass in einem zweiten Schritt das Wärmeschutzblech (18) elastisch zusammengedrückt wird, wenn die Flanschschraube (6) mit dem Wärmeschutzblech (18) in die Flanschbohrung (19) eingeführt wird.
